# EUROPÄISCHE PATENTSCHRIFT

(11) **EP 3 630 332 B1**
(45) Veröffentlichungstag und Bekanntmachung des Hinweises auf die Patenterteilung: **01.12.2021**
(21) Anmeldenummer: 18725752.2
(22) Anmeldetag: 18.04.2018
(51) Int. Cl.: F02M 37/34, F02M 37/50, F02M 37/54, B01D 35/027, B01D 36/00, B01D 29/11, B01D 29/56, F01N 3/20, F02M 37/22

(54) **FLÜSSIGKEITSFILTER**
LIQUID FILTER
FILTRE POUR LIQUIDE

(30) Priorität: 30.05.2017 DE 102017209039
(43) Veröffentlichungstag der Anmeldung: 08.04.2020
(73) Patentinhaber: Robert Bosch GmbH, 70442 Stuttgart (DE)
(72) Erfinder: REY PORTERO, Francisco, 41010 Sevilla (ES)
(86) Internationale Anmeldenummer: PCT/EP2018/059808
(87) Internationale Veröffentlichungsnummer: WO 2018/219549

(56) Entgegenhaltungen:
- DE-A1-102011 087 532
- DE-A1-102012 222 943
- DE-A1-102015 200 302
- US-B1- 6 691 511

## Beschreibung

### Stand der Technik

Die vorliegende Erfindung betrifft einen Flüssigkeitsfilter. Außerdem betrifft die Erfindung ein Tankeinsatzmodul zum Einsetzen in einen Vorratstank umfassend einen derartigen Flüssigkeitsfilter. Der Begriff umfassen ist im Rahmen dieser Erfindung als Synonym zu dem Begriff aufweisen zu verstehen.

Insbesondere aus dem Kraftfahrzeugbereich sind Filter bekannt, die zur Filterung von Harnstofflösungen ausgebildet sind. Harnstoff wird bei Fahrzeugen, insbesondere bei Dieselfahrzeugen, zum Reduzieren von ausgestoßenen Stickoxiden verwendet. Dazu wird eine Harnstofflösung in das Abgas des Dieselmotors eingespritzt, um so mittels selektiver katalytischer Reduktion die Stickoxidausstöße zu verringern. Der Harnstoff wird dazu in einem Vorratstank gelagert, wobei der Harnstoff vor Verwendung gefiltert werden muss. Allerdings ergeben sich Probleme bei den Filtern derart, dass bei einer ersten Füllung eines trockenen Filters Luft vorhanden ist, wobei besagte Luft zu einer Fehlfunktion einer Pumpe zum Ansaugen des Harnstoffs führen kann.

Dieses Problem des ersten Befüllens des Filters ist im Stand der Technik bekannt und wird insbesondere durch die DE 10 2012 222 943 A1 versucht zu lösen. In diesem Dokument wird eine Materialeigenschaft temporär, begrenzt und partiell modifiziert. In vielen Fällen wird als chemische Verbindung für einen solchen Vorgang eine siliziumbasierte Lösung verwendet. Oftmals sind Flüssigkeitsfilter hydrophil ausgebildet, sodass eine große Luftmenge bei einem ersten Befüllen des Filters innerhalb des Filters verbleibt. Diese Luftmenge führt zu Problemen in einer Ansaugpumpe. Durch das Aufbringen einer entsprechenden chemischen Verbindung auf die Oberfläche des Flüssigkeitsfilters werden hydrophobe Eigenschaften erreicht, wodurch eine größere Luftdurchlässigkeit erreicht wird. Somit lässt sich eingesperrte Luft innerhalb des Flüssigkeitsfilters entfernen. Nach einer gewissen Zeit, die für das Entfernen von eingesperrter Luft ausreichend ist, ist die chemische Verbindung aufgebraucht und sämtliche Materialien weisen wieder ihre ursprünglichen Eigenschaften auf.

Als Alternative zu dem zuvor beschriebenen Verfahren ist ebenso möglich, entsprechende Luftventile bereitzuhalten, durch die Luft entweichen kann, sobald der Flüssigkeitsfilter das erste Mal gefüllt wird.

Aus der DE 10 2011 087 532 A1 ist eine Filtereinrichtung mit einem rahmenartigen Filterträger und wenigstens einem an dem Filterträger befestigten Filterelement bekannt.

Aus der DE 10 2015 200 302 A1 ist ein Fluidtank mit einer Filtereinrichtung bekannt.

### Offenbarung der Erfindung

Durch den erfindungsgemäßen Flüssigkeitsfilter ist ermöglicht, Medien sicher und zuverlässig zu filtern. Gleichzeitig ist sichergestellt, dass der Flüssigkeitsfilter einfach und aufwandsarm mit einem Fluid gefüllt werden kann, sodass das erstmalige Befüllen zuverlässig abläuft, ohne dass eine große Luftmenge innerhalb des Flüssigkeitsfilters verbleibt. Somit ist sichergestellt, dass keine Fehlfunktionen in Pumpen, die dem Flüssigkeitsfilter nachgeschaltet sind, auftreten.

Der Flüssigkeitsfilter umfasst einen Tragrahmen, wobei der Tragrahmen eine Filterkammer und eine Zusatzkammer aufweist. In oder an der Filterkammer ist ein Filtermedium anordenbar. Die Filterkammer ist von der Zusatzkammer durch eine Trennwand getrennt. Die Filterkammer weist außerdem einen ersten Durchlass und einen zweiten Durchlass auf, sodass Fluid durch die Filterkammer strömen kann. Insbesondere kann das Fluid von dem ersten Durchlass zu dem zweiten Durchlass oder von dem zweiten Durchlass zu dem ersten Durchlass strömen. Sobald das Fluid durch die Filterkammer strömt, wird das Fluid gefiltert und unerwünschte Partikel werden von dem Filtermedium zurückgehalten. Die Zusatzkammer ist durch zumindest eine erste Öffnung in dem Tragrahmen mit einer Umgebung des Flüssigkeitsfilters verbunden. Außerdem ist die Zusatzkammer durch zumindest eine zweite Öffnung in der Trennwand mit der Filterkammer verbunden. Die beiden Verbindungen dienen insbesondere zur Fluidkommunikation. Die erste Öffnung und die zweite Öffnung sind durch ein innerhalb der Zusatzkammer angeordnetes Verschlusselement verschließbar. Das Verschlusselement umfasst ein variables, also veränderbares, Volumen, um die erste Öffnung und die zweite Öffnung zu verschließen. Somit wird durch eine Vergrößerung des Volumens des Verschlusselements die erste Öffnung sowie die zweite Öffnung verschlossen. In diesem Fall ist keinerlei Fluidkommunikation durch die erste Öffnung und die zweite Öffnung mehr möglich.

Sind die erste Öffnung und die zweite Öffnung nicht durch das Verschlusselement verschlossen, so kann Luft von der Filterkammer durch die zweite Öffnung in die Zusatzkammer gelangen, und von dort durch die erste Öffnung an die Umgebung, z.B. in einen Tank, insbesondere Flüssigkeitstank, abgegeben werden. Somit ist ein sicheres und zuverlässiges Entlüften der Filterkammer ermöglicht. Gleichzeitig ist nach dem Entlüften sichergestellt, dass keine ungefilterten Fluide den Flüssigkeitsfilter passieren können. Dies wird durch das Verschließen der ersten Öffnung und der zweiten Öffnung durch das Verschlusselement erreicht. Der Prozess der Volumenveränderung des Verschlusselements ist vorteilhafterweise reversibel. Somit kann der Flüssigkeitsfilter insbesondere vollständig geleert werden, um anschließend einfach und aufwandsarm erneut befüllt zu werden. Dabei ist stets sichergestellt, dass keine oder nur wenig unerwünschte Luft innerhalb des Flüssigkeitsfilters verbleibt, sodass Fehlfunktionen einer nachgeschalteten Pumpe ausgeschlossen werden können.

Die Unteransprüche haben bevorzugte Weiterbildungen der Erfindung zum Inhalt.

Das Verschlusselement ist bevorzugt ein Schwammelement. Das Schwammelement besteht lediglich beispielhaft aus einem porösen Werkstoff, besonders bevorzugt aus Zellulosefasern und/oder aus geschäumtem Kunststoff. Das Schwammelement weist ohne Fluidbenetzung ein geringeres Volumen auf als mit Fluidbenetzung. Dabei ist vorgesehen, dass das Schwammelement zur Aufnahme und/oder Speicherung von Fluid, insbesondere von Wasser, ausgebildet ist. Die maximal mögliche Aufnahme von Wasser entspricht dabei insbesondere einem Betrag zwischen dem 0,5-Fachen und dem 5-Fachen des Eigengewichts des Schwammelements. Sobald das Schwammelement das Fluid aufgenommen hat, wird das Fluid von dem Schwammelement bevorzugt gespeichert, kann daher das Schwammelement nicht mehr ohne weiteres, wie z.B. durch Druck, Hitze, Verdunsten, etc., verlassen. Unter Schwamm ist somit im Rahmen dieser Erfindung nicht nur das Skelett der Schwämme als Lebewesen zu verstehen, sondern vielmehr auch jegliche Art von künstlich hergestelltem Schwamm. Besonders bevorzugt nimmt das Volumen des Schwammelements bei Fluidbenetzung zu, vorteilhafterweise, um zumindest das 1,5-Fache, besonders bevorzugt um zumindest das Doppelte, wodurch sich das Volumen des Verschlusselements verändert. Somit lassen sich durch Fluidbenetzung des Schwammelements die erste Öffnung und die zweite Öffnung verschließen. Dies wird dadurch erreicht, dass das Verschlusselement innerhalb der Zusatzkammer angeordnet ist. Ist das Volumen des Verschlusselements klein, da der Flüssigkeitsfilter noch nicht mit einem Fluid gefüllt ist, so werden die erste Öffnung und die zweite Öffnung nicht verschlossen. Unter Fluidbenetzung ist insbesondere das Benetzen der äußeren Oberfläche als auch ein Durchtränken des Schwammelements zu verstehen. Mit zunehmendem Volumen des Verschlusselements aufgrund von Befüllung des Flüssigkeitsfilters werden die erste Öffnung und die zweite Öffnung zunehmend verschlossen. Besagter Vorgang ist besonders vorteilhaft reversibel, sodass bei einer vollständigen Entleerung des Flüssigkeitsfilters das Verschlusselement sein Volumen wiederum verkleinert (z.B. durch Verdunstung) und somit die erste Öffnung und die zweite Öffnung freigibt. Das Volumen des Schwammelements mit Fluidbenetzung entspricht insbesondere dem Volumen, das das Schwammelement aufweist, wenn dieses 100 % seiner Flüssigkeitsaufnahmekapazität erreicht hat, bevorzugt, wenn dieser 90 % seiner Flüssigkeitsaufnahmekapazität erreicht hat, besonders bevorzugt, wenn dieser 80 % seiner maximalen Flüssigkeitsaufnahmekapazität erreicht hat. Das Volumen des Schwammelements wächst somit bevorzugt mit zusätzlicher Fluidaufnahme an, wobei ein maximales Volumen bei maximaler Flüssigkeitsaufnahme bevorzugt mindestens so groß ist wie das Volumen der Zusatzkammer.

Besonders vorteilhaft ist das Volumen des Verschlusselements ohne Fluidbenetzung geringer als das Volumen der Zusatzkammer. Das Volumen des Verschlusselements mit Fluidbenetzung ist bevorzugt mindestens so groß wie das Volumen der Zusatzkammer. Somit wird ohne Fluidbenetzung erreicht, dass Fluid ungehindert durch die erste Öffnung und die zweite Öffnung gelangen kann. Wird hingegen der Flüssigkeitsfilter mit einem Fluid gefüllt, so wird das Schwammelement mit dem Fluid benetzt, wodurch das Volumen des Verschlusselements zunimmt. Sobald das Volumen des Verschlusselements das Volumen der Zusatzkammer erreicht hat, sind die erste Öffnung und die zweite Öffnung durch das Verschlusselement blockiert. Somit kann kein Fluidaustausch durch die erste Öffnung und die zweite Öffnung erfolgen. Ist vorgesehen, dass das Verschlusselement aufgrund der Fluidbenetzung auf ein Volumen größer als das Volumen der Zusatzkammer anwachsen soll, so ist die erste Öffnung ebenso wie die zweite Öffnung sicher und zuverlässig verschlossen, da eine Volumenveränderung des Verschlusselements durch Begrenzungswände der Zusatzkammer begrenzt wird. Somit entsteht ein gleichmäßiger Innendruck innerhalb der Zusatzkammer, der zu einem festen Anliegen des Verschlusselements an den Begrenzungswänden der Zusatzkammer führt. Dies führt auch zu einem Abdichten der ersten Öffnung und der zweiten Öffnung, sodass keinerlei Fluid durch die erste Öffnung und die zweite Öffnung treten kann.

Die Zusatzkammer weist bevorzugt ein mit Ausnahme der ersten Öffnung und der zweiten Öffnung abgeschlossenes Volumen auf. Das abgeschlossene Volumen beschränkt eine Ausdehnung des Verschlusselements aufgrund von Fluidbenetzung. Somit kann der zuvor beschriebene Innendruck vorteilhaft erreicht werden, indem das Verschlusselement derart ausgelegt wird, dass es sich aufgrund von Fluidbenetzung auf ein Volumen ausdehnt, das größer ist als das abgeschlossene Volumen der Zusatzkammer. Somit wird das maximale Volumen des Verschlusselements nicht durch eine maximale Menge Fluid bestimmt, sondern durch die Abmessungen der Zusatzkammer. Dadurch ist sichergestellt, dass die erste Öffnung und die zweite Öffnung aufgrund von dichtem Anliegen des Verschlusselements an den Begrenzungswänden der Zusatzkammer sicher und zuverlässig abgedichtet sind.

In einer bevorzugten Ausführungsform ist das Verschlusselement als Vorfilter ausgebildet. Dies ist lediglich beispielhaft auch dann möglich, wenn das Verschlusselement als Schwammelement ausgebildet ist. Durch die Ausbildung als Vorfilter ist insbesondere ermöglicht, dass beim Befüllen des Flüssigkeitsfilters mit Fluid eine Filterfunktion zumindest teilweise gewährt ist. Somit ist eine Filterfunktion des Flüssigkeitsfilters sichergestellt, um eine nachgeschaltete Komponente vor Verunreinigungen des Fluids zu schützen.

Die erste Öffnung umfasst bevorzugt eine obere erste Öffnung und eine untere erste Öffnung. Die zweite Öffnung umfasst vorteilhafterweise eine obere zweite Öffnung, eine untere zweite Öffnung. Die Angaben oben und unten beziehen sich dabei vorteilhafterweise auf eine während der Verwendung des Flüssigkeitsfilters vorgesehene Lage des Tragrahmens. Dies bedeutet, dass der Flüssigkeitsfilter eine bevorzugte Orientierung aufweist, in der dieser betrieben wird. In dieser Orientierung ist die obere erste Öffnung oberhalb der unteren ersten Öffnung und die obere zweite Öffnung ist oberhalb der unteren zweiten Öffnung angeordnet. Auf diese Weise ist erreichbar, dass durch die untere erste Öffnung Fluid in die Zusatzkammer gelangen kann, während Luft über die obere erste Öffnung aus der Zusatzkammer entweichen kann. Über die untere zweite Öffnung kann das Fluid von der Zusatzkammer in die Filterkammer gelangen. Auch hier kann Luft durch die obere zweite Öffnung aus der Filterkammer entweichen und in die Zusatzkammer gelangen. Durch die somit vorhandenen insgesamt vier Öffnungen lässt sich daher ein Entlüften des Flüssigkeitsfilters sicherstellen. Dabei ist bevorzugt vorgesehen, dass die untere erste Öffnung und die obere erste Öffnung ebenso wie die untere zweite Öffnung und die obere zweite Öffnung einen maximalen Abstand zueinander aufweisen. Insbesondere ist die obere zweite Öffnung in besagter vorteilhafter Ausrichtung des Flüssigkeitsfilters an einem maximalen oberen Bereich der Trennwand zwischen Filterkammer und Zusatzkammer angeordnet. Somit kann Luft sicher und zuverlässig von der Filterkammer in die Zusatzkammer entweichen, um die Filterkammer vollständig von Luft zu befreien. Die obere erste Öffnung ist vorteilhafterweise oberhalb der oberen zweiten Öffnung angebracht, um sicherzustellen, dass sämtliche Luft aus der Zusatzkammer vollständig entweichen kann. Sollte innerhalb des Flüssigkeitsfilters, insbesondere innerhalb der Filterkammer, trotz dieser Anordnung noch Luft verbleiben, so ist die verbleibende Luftmenge minimiert, was zu keinen Problemen hinsichtlich des Betreibens der Pumpe führt.

Die Filterkammer ist bevorzugt größer als die Zusatzkammer ausgebildet. Das Volumen der Filterkammer beträgt bevorzugt zumindest das Doppelte, insbesondere zumindest das Dreifache des Volumens der Zusatzkammer. Somit dient die Zusatzkammer lediglich zum Entlüften der Filterkammer oder ggf. zum Vorfiltern während des Befüllvorgangs, während die Filterkammer zum Aufnehmen des Filtermediums ausgebildet ist und somit eine Filterwirkung ausführt. Das Filtermedium kann in oder an der Filterkammer angeordnet sein. Besonders vorteilhaft weisen Filterkammer und Zusatzkammer dieselbe Dicke auf, wobei die Dicke in einer Richtung zwischen dem ersten Durchlass und dem zweiten Durchlass gemessen wird. Durch eine derartige Ausgestaltung ist ein einfaches und aufwandsarmes Herstellen des Flüssigkeitsfilters ermöglicht.

Die Filterkammer weist bevorzugt ein durchgängiges Filtermedium auf. Alternativ weist die Filterkammer bevorzugt ein erstes Filtermedium und ein zweites Filtermedium mit einem dazwischenliegenden Hohlraum auf. Es ist vorgesehen, dass die zweite Öffnung besagten Hohlraum mit der Zusatzkammer verbindet. Dadurch ist erreicht, dass der Hohlraum entlüftet werden kann, wenn der Flüssigkeitsfilter erstmalig mit Fluid befüllt wird. Besonders vorteilhaft ist vorgesehen, dass der Tragrahmen mit zwei Filtermedien bespannt ist, sodass das Innere der Filterkammer frei bleibt und damit einen Hohlraum darstellt. Ein Vorteil dieses Aufbaus ist, dass die Oberfläche, die zum Filtern zur Verfügung steht, maximiert ist. Diese Filtermedien können beispielsweise als Filtermembranen aus Kunststoff oder Metall gestaltet sein und z.B. eine Dicke im Bereich von 5 µm bis 1000 µm, bevorzugt von 10 µm bis 200 µm, aufweisen, z.B. 50 µm, 100 µm, 150 µm, 200 µm.

Die zweite Öffnung ist, insbesondere vollständig, in einem Bereich der Trennwand zwischen dem ersten Filtermedium und dem zweiten Filtermedium angeordnet. Somit ist erreicht, dass durch die zweite Öffnung der Hohlraum zwischen erstem Filtermedium und zweitem Filtermedium mit der Zusatzkammer verbunden ist. Wie bereits beschrieben, ist somit ein sicheres und zuverlässiges Entlüften des Flüssigkeitsfilters, insbesondere des Hohlraums zwischen erstem Filtermedium und zweitem Filtermedium, ermöglicht.

Die Erfindung betrifft außerdem ein Tankeinsatzmodul. Das Tankeinsatzmodul ist zum Einsatz in einen Flüssigkeitstank ausgebildet. Dabei ist vorgesehen, dass das Tankeinsatzmodul einen Flüssigkeitsfilter wie zuvor beschrieben aufweist. Der Flüssigkeitstank weist einen Einlass und einen Auslass auf, wobei der Auslass mit der Filterkammer des Tankeinsatzmoduls zur Fluidkommunikation verbunden ist. Dadurch ist erreicht, dass sämtliches Fluid innerhalb des Flüssigkeitstanks vor dem Verlassen des Flüssigkeitstanks durch den Flüssigkeitsfilter gefiltert wird. Dies führt dazu, dass an nachfolgende Komponenten, insbesondere an eine nachfolgende Pumpe, ausschließlich gefiltertes Fluid übertragen wird. Gleichzeitig ist der Aufbau des Flüssigkeitstanks vereinfacht, da der Flüssigkeitsfilter einfach und aufwandsarm in dem Tankeinsatzmodul angebracht werden kann, während ein erstmaliges Befüllen des Flüssigkeitsfilters einfach und aufwandsarm durchgeführt werden kann, da der Flüssigkeitsfilter sich selbstentlüftend ausgebildet ist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Flüssigkeitstanks mit einem Tankeinsatzmodul gemäß einem Ausführungsbeispiel der Erfindung,
- Figur 2: eine schematische Ansicht eines Tragrahmens eines Flüssigkeitsfilters gemäß einem Ausführungsbeispiel der Erfindung,
- Figur 3: eine erste schematische Ansicht des Flüssigkeitsfilters gemäß dem Ausführungsbeispiel der Erfindung während eines erstmaligen Befüllens mit Fluid,
- Figur 4: eine zweite schematische Ansicht des Flüssigkeitsfilters gemäß dem Ausführungsbeispiel der Erfindung während eines erstmaligen Befüllens mit Fluid,
- Figur 5: eine dritte schematische Ansicht des Flüssigkeitsfilters gemäß dem Ausführungsbeispiel der Erfindung während eines erstmaligen Befüllens mit Fluid,
- Figur 6: eine vierte schematische Ansicht des Flüssigkeitsfilters gemäß dem Ausführungsbeispiel der Erfindung während eines erstmaligen Befüllens mit Fluid, und
- Figur 7: eine fünfte schematische Ansicht des Flüssigkeitsfilters gemäß dem Ausführungsbeispiel der Erfindung während eines erstmaligen Befüllens mit Fluid.

### Ausführungsformen der Erfindung

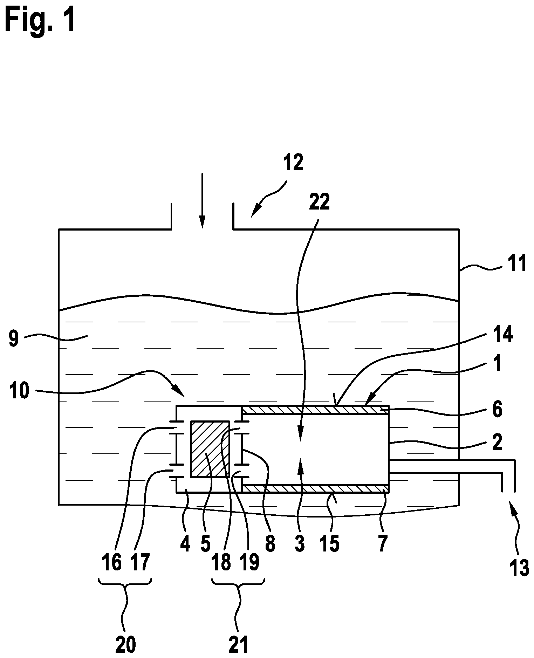

Figur 1 zeigt schematisch ein Tankeinsatzmodul 10 gemäß einem Ausführungsbeispiel der Erfindung. Das Tankeinsatzmodul 10 umfasst einen Flüssigkeitsfilter 1 gemäß einem Ausführungsbeispiel der Erfindung.

Das Tankeinsatzmodul 10 ist in einen Flüssigkeitstank 11 eingebracht bzw. in oder an dem Flüssigkeitstank 11 angeordnet bzw. befestigt. In dem Flüssigkeitstank 11 ist ein Fluid aufgenommen, wobei das Fluid über einen Einlass 12 in den Flüssigkeitstank 11 einbringbar ist. Der Flüssigkeitstank 11 weist außerdem einen Auslass 13 auf, über den das Fluid 9 aus dem Flüssigkeitstank 11 entfernbar ist.

Das Tankeinsatzmodul 10 ist in eine Öffnung des Flüssigkeitstanks 11 eingesetzt. Dabei wird sämtliches Fluid 9 vor Verlassen des Flüssigkeitstanks 11 durch den Flüssigkeitsfilter 1 des Tankeinsatzmoduls 10 gefiltert wird. Dadurch sind nachfolgende Komponenten, wie insbesondere eine Ansaugpumpe, vor Verunreinigungen des Fluids 9 geschützt.

Der Flüssigkeitsfilter 1 umfasst eine Filterkammer 3 und eine Zusatzkammer 4, die durch einen Tragrahmen 2 gebildet sind. Der Tragrahmen 2 ist vorteilhafterweise aus Kunststoff gefertigt und ermöglicht es, an der Filterkammer 3 ein erstes Filtermedium 6 sowie ein zweites Filtermedium 7 anzubringen. Ein Inneres der Filterkammer 3 verbleibt dabei leer und bildet somit einen Hohlraum 22, der im Betrieb des Flüssigkeitsfilters 1 mit Fluid zu befüllen ist. Der Hohlraum 22 wird begrenzt einerseits durch das erste Filtermedium 6 und das zweite Filtermedium 7, andererseits durch Tragwände des Tragrahmens 2. Der Auslass 13 ist mit der Filterkammer 3, insbesondere mit dem Hohlraum 22, zur Fluidkommunikation verbunden. Somit wurde das über den Auslass 13 ausgegebene Fluid zuvor durch das erste Filtermedium 6 und/oder das zweite Filtermedium 7 gefiltert.

Gegenüber der Zusatzkammer 4 ist die Filterkammer 3 und damit der Hohlraum 22 innerhalb der Filterkammer 3 durch eine Trennwand 8 abgegrenzt. Wird der Flüssigkeitstank 11 erstmalig mit Fluid 9 befüllt, so ist das gesamte Tankeinsatzmodul 10 und damit der gesamte Flüssigkeitsfilter 1 trocken, das heißt nicht mit Fluid benetzt und/oder getränkt. Somit muss bei einem erstmaligen Befüllen des Flüssigkeitstanks 11 und damit des Flüssigkeitsfilters 1 sichergestellt werden, dass sämtliche Luft, insbesondere zumindest der größtmögliche Anteil der Luft, innerhalb des Hohlraums 22 der Filterkammer 3 entfernt wird. Hierzu ist die Zusatzkammer 4 vorgesehen, die eine erste Öffnung 20 sowie eine zweite Öffnung 21 aufweist. Außerdem ist innerhalb der Zusatzkammer 4 ein Verschlusselement 5 vorgesehen, mit dem die erste Öffnung 20 und die zweite Öffnung 21 verschließbar ist. Es versteht sich, dass alternativ oder zusätzlich zu der Ausbildungsform mit zwei Filtermedien 6, 7 auch ein im Hohlraum 22 angeordnetes Filtermedium, z.B. ein herkömmliches Filterelement (Sternfilter oder Wickelfilter) verwendet werden kann.

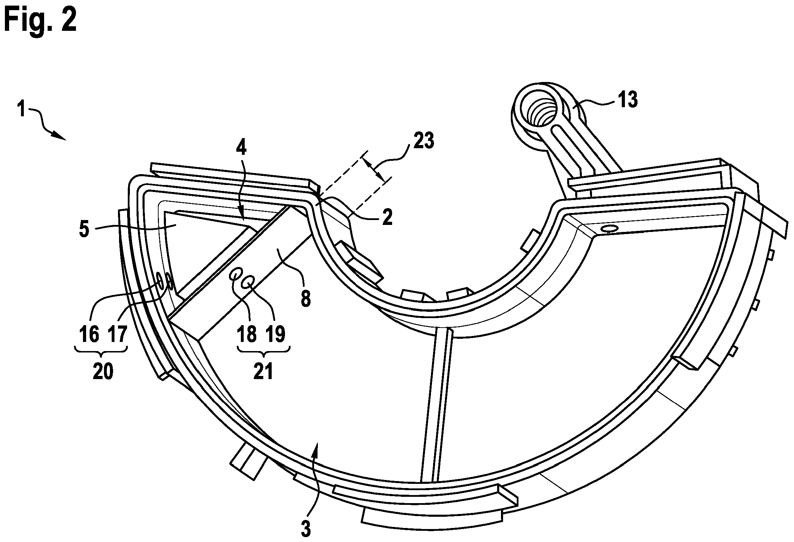

In Figur 2 ist eine Detailansicht des Tragrahmens 2 dargestellt, wobei innerhalb der Zusatzkammer 4 außerdem das Verschlusselement 5 gezeigt ist. Figur 2 zeigt somit den Flüssigkeitsfilter 1, wobei lediglich das erste Filtermedium 6 und das zweite Filtermedium 7 nicht dargestellt sind. Sowohl aus Figur 1 als auch aus Figur 2 ist ersichtlich, dass die Zusatzkammer 4 eine erste Öffnung 20 und eine zweite Öffnung 21 aufweist. Die erste Öffnung 20 dient zum Verbinden des Inneren des Flüssigkeitstanks 11 mit der Zusatzkammer 4. Die zweite Öffnung 21 dient zum Verbinden der Zusatzkammer 4 mit der Filterkammer 3. Somit erlaubt die Verbindung durch die erste Öffnung 20 und die zweite Öffnung 21 eine Fluidkommunikation, z.B. für Harnstofflösung. Der Tragrahmen 2 weist beispielsweise eine konstante Dicke 23 auf, die zwischen erstem Durchlass 14 und zweitem Durchlass 15 bestimmt wird. Insbesondere weisen somit Filterkammer 3 und Zusatzkammer 4 jeweils eine gleiche Dicke auf.

Wie aus Figur 1 ersichtlich ist, weist der Flüssigkeitsfilter 1 eine bevorzugte Richtung auf, in der der Flüssigkeitsfilter 1 im Betrieb orientiert ist. Ausgehend von dieser Orientierung lässt sich die erste Öffnung 20 in eine obere erste Öffnung 16 und eine untere erste Öffnung 17 unterteilen. Ebenso lässt sich die zweite Öffnung 21 in eine obere zweite Öffnung 18 und eine untere zweite Öffnung 19 unterteilen. Dabei ist vorgesehen, dass sowohl die obere zweite Öffnung 18 als auch die untere zweite Öffnung 19 den Hohlraum 22 der Filterkammer 3 zwischen erstem Filtermedium 6 und zweitem Filtermedium 7 mit der Zusatzkammer 4 zur Fluidkommunikation verbinden. Besonders vorteilhaft ist dabei vorgesehen, dass die obere zweite Öffnung 18 und die untere zweite Öffnung 19 einen maximalen Abstand zueinander aufweisen. Somit ist insbesondere die obere zweite Öffnung 18 unmittelbar an dem ersten Filtermedium 6 angeordnet, während die untere zweite Öffnung 19 bevorzugt unmittelbar an dem zweiten Filtermedium 7 angeordnet ist.

Auch die obere erste Öffnung 16 und die untere erste Öffnung 17 weisen bevorzugt einen maximalen Abstand zueinander auf. Die obere erste Öffnung 16 ist insbesondere an einem höchsten Punkt des Flüssigkeitsfilters 1, insbesondere der Zusatzkammer 4, angeordnet. Durch ein derartiges Design ist ermöglicht, den Hohlraum 22 der Filterkammer 3 zwischen erstem Filtermedium 6 und zweitem Filtermedium 7, (nahezu) vollständig zu entlüften.

Die zuvor beschriebene Anordnung der jeweiligen Öffnungen 16, 17, 18, 19 stellt einen Optimalfall dar. Es sind Abweichungen möglich, insbesondere muss die obere erste Öffnung 16 nicht zwangsläufig an einem höchsten Punkt des Flüssigkeitsfilters 1 angebracht sein, ebenso muss die obere zweite Öffnung 18 nicht unmittelbar an dem ersten Filtermedium 6 angeordnet sein. Ist dies der Fall, so verbleibt eine Restluftmenge innerhalb des Flüssigkeitsfilters 1. Durch entsprechende Wahl der Anordnung, insbesondere der oberen ersten Öffnung 16 und der oberen zweiten Öffnung 18 lässt sich diese Luftmenge einstellen, sodass die Luftmenge auf eine solche Menge reduziert werden kann, die für dem Flüssigkeitsfilter 1 nachfolgende Komponenten, insbesondere für eine nachfolgende Pumpe, unschädlich ist.

Die erste Öffnung 20 und die zweite Öffnung 21 sind in einem trockenen Zustand des Flüssigkeitsfilters, das heißt bevor Fluid in Kontakt mit dem Flüssigkeitsfilter 1 gelangt, geöffnet und erlauben somit eine Fluidkommunikation. Durch das Verschlusselement 5 sind die erste Öffnung 20 und die zweite Öffnung 21 verschließbar, um somit die erste Öffnung 20 und die zweite Öffnung 21 abzudichten. Das Verschlusselement 5 ist dazu ausgebildet, sein Volumen zu verändern. In einem trockenen Zustand ist das Volumen des Verschlusselements 5 kleiner als das Volumen der Zusatzkammer 4. Somit findet keinerlei Versiegelung oder Abdichtung der ersten Öffnung 20 und der zweiten Öffnung 21 statt.

Das Verschlusselement 5 ist beispielsweise ein Schwammelement. Das Schwammelement umfasst einen porösen Werkstoff, der zur Aufnahme und Speicherung von Fluid ausgebildet ist. Sobald das Schwammelement Fluid aufnimmt, vergrößert sich sein Volumen, insbesondere um zumindest das Doppelte. Das Schwammelement ist vorteilhafterweise aus Zellulosefasern und/oder geschäumten Kunststoff gefertigt. Dadurch ist ermöglicht, dass das Verschlusselement das 0,5-Fache bis 5-Fache des Eigengewichts an Fluid aufnehmen kann. Wird somit der Flüssigkeitsfilter 1 mit Fluid gefüllt, so vergrößert sich das Volumen des Verschlusselements 5 insbesondere so lange, bis das Volumen des Verschlusselements 5 das Volumen der Zusatzkammer 4 erreicht hat. Ein weiteres Vergrößern des Volumens des Verschlusselements 5 ist dann nicht mehr möglich, selbst wenn das maximale Volumen des Verschlusselements 5 bei maximaler Wasseraufnahme größer als das Volumen der Zusatzkammer 4 ist. Besonders vorteilhaft erreicht das Verschlusselement 5 das Volumen der Zusatzkammer 4 bei 100 % der maximalen Fluidaufnahme, bevorzugt bei höchstens 90 % der maximalen Fluidaufnahme, insbesondere bei höchstens 80 % der maximalen Fluidaufnahme des Schwammelements. Nach dem Abdichten der ersten Öffnung 20 und der zweiten Öffnung 21 ist eine Fluidkommunikation durch diese Öffnungen 20, 21 nicht mehr möglich. Besonders vorteilhaft ist das Verändern des Volumens des Verschlusselements 5 reversibel, sodass bei Trockenlauf des Flüssigkeitsfilters 1 das Verschlusselement 5 sein Volumen verkleinert, z.B. durch Verdunsten, wodurch die erste Öffnung 20 und die zweite Öffnung 21 wieder freigegeben sind.

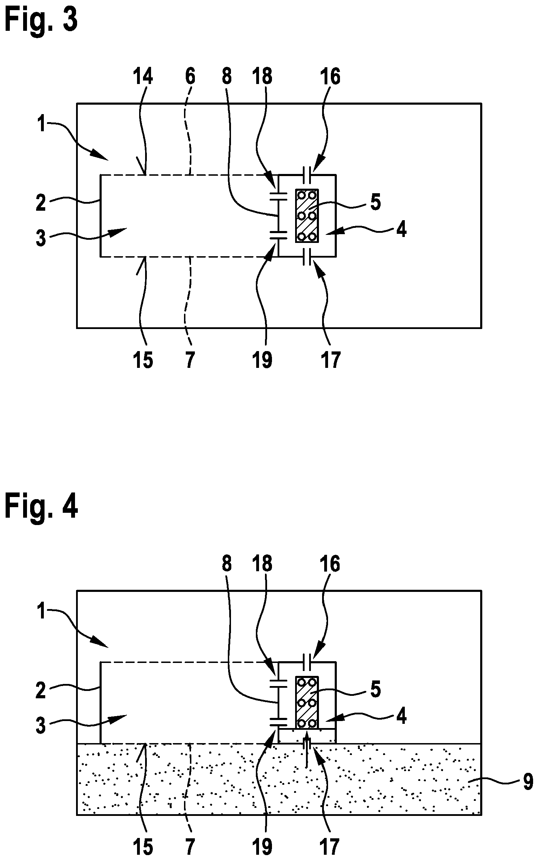

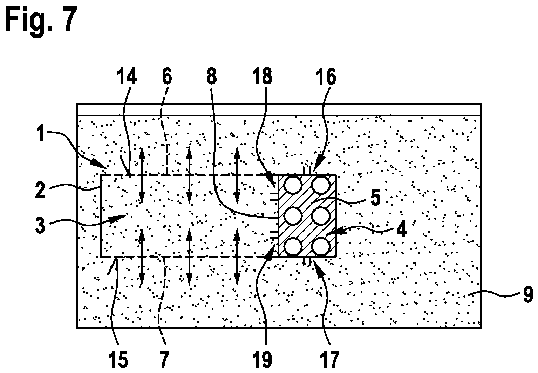

Der Vorgang des Entlüftens beim Befüllen des Flüssigkeitsfilters 1 mit Fluid ist in den Figuren 3 bis 7 dargestellt. Dabei zeigt Figur 3 einen Zustand, in dem der Flüssigkeitsfilter 1 vollständig trocken ist, während Figur 7 den vollständig mit Fluid gefüllten und entlüfteten Flüssigkeitsfilter 1 zeigt. Die Figuren 4, 5 und 6 zeigen Zwischenstadien zwischen diesen beiden Zuständen. In den Figuren 3 bis 7 sind aus Gründen der Übersichtlichkeit der Einlass 12 und der Auslass 13 nicht dargestellt.

Aus Figur 3 ist ersichtlich, dass der Hohlraum 22 zwischen dem ersten Filtermedium 6 und dem zweiten Filtermedium 7 vollständig mit Luft gefüllt ist. Gleichzeitig ist die obere erste Öffnung 16, die untere erste Öffnung 17, die obere zweite Öffnung 18 und die untere zweite Öffnung 19 jeweils durch das Verschlusselement 5 freigegeben, sodass hier eine Fluidkommunikation möglich ist. Figur 4 zeigt den Beginn des Befüllens des Flüssigkeitsfilters 1 mit Fluid. Um zu vermeiden, dass Luft innerhalb des Hohlraums 22 zwischen erstem Filtermedium 6 und zweitem Filtermedium 7 eingeschlossen wird, ist die Zusatzkammer 4 vorhanden. So ist ersichtlich, dass Fluid über die untere erste Öffnung 17 in die Zusatzkammer 4 eindringen kann. Luft innerhalb der Zusatzkammer 4 kann über die obere erste Öffnung 16 entweichen.

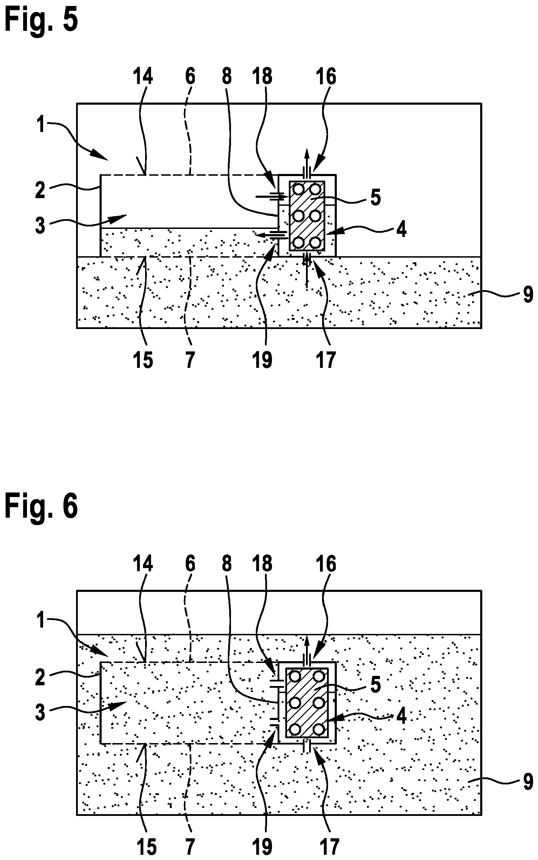

Wie aus Figur 5 ersichtlich ist, kann anschließend das Fluid über die untere zweite Öffnung 19 von der Zusatzkammer 4 in die Filterkammer 3 gelangen und somit einen Hohlraum 22 zwischen erstem Filtermedium 6 und zweitem Filtermedium 7 befüllen. Innerhalb des Hohlraums 22 ist außerdem Luft vorhanden, die durch die obere zweite Öffnung 18 in die Zusatzkammer 4 und von dort durch die obere erste Öffnung 16 in die Umgebung entweichen kann. Gleichzeitig ist ersichtlich, dass das Verschlusselement 5, das z.B. als Schwammelement ausgebildet ist, Fluid aufnimmt und somit sein Volumen vergrößert. Allerdings ist weiterhin sichergestellt, dass eine Fluidkommunikation durch die obere erste Öffnung 16, die untere erste Öffnung 17, die obere zweite Öffnung 18 und die untere zweite Öffnung 19 der Zusatzkammer 4 erfolgen kann. Selbstverständlich kann Fluid während des Befüllens auch durch das erste Filtermedium 6 oder zweite Filtermediums 7 in die Filterkammer 3 eintreten.

In Figur 6 ist die Filterkammer 3 vollständig mit Fluid gefüllt. Dies bedeutet, dass keinerlei Luft zwischen dem ersten Filtermedium 6 und dem zweiten Filtermedium 7 verbleibt. Die Luft aus der Filterkammer 3 wurde (nahezu) vollständig durch das Fluid in die Zusatzkammer 4 gedrückt. Aus der Zusatzkammer 4 entweicht die Luft durch die obere erste Öffnung 16. Das Verschlusselement 5 ist aufgrund der zunehmenden Fluidbenetzung weiter vergrößert, wobei immer noch sichergestellt ist, dass eine Fluidkommunikation durch die obere erste Öffnung 16, die untere erste Öffnung 17, die obere zweite Öffnung 18 und die untere zweite Öffnung 19 erfolgen kann.

In Figur 7 ist schließlich dargestellt, dass das Verschlusselement 5 ein Volumen aufweist, das dem Volumen der Zusatzkammer 4 entspricht. Somit ist insbesondere sichergestellt, dass sämtliche Luft aus der Zusatzkammer 4 entfernt ist. Gleichzeitig ist eine Fluidkommunikation durch die obere erste Öffnung 16, die untere erste Öffnung 17, die obere zweite Öffnung 18 und die untere zweite Öffnung 19 verhindert. Ebenso ist (nahezu) sämtliche Luft aus der Filterkammer 3 entfernt, sodass der Flüssigkeitsfilter 1 vollständig entlüftet ist. Der Flüssigkeitsfilter 1 kann daher seine Filterfunktion wahrnehmen, ohne dass nachfolgende Komponenten Fehlfunktionen aufgrund von Luft innerhalb des Flüssigkeitsfilters 1 erleiden.

Der Flüssigkeitsfilter 1 weist bevorzugt einen ersten Durchlass 14 und einen zweiten Durchlass 15 auf. Durch den ersten Durchlass 14 und den zweiten Durchlass 15 ist Fluid durch den Flüssigkeitsfilter 1 transportierbar. Die Oberfläche des ersten Filtermediums 6 stellt dabei den ersten Durchlass 14 dar, während die Oberfläche des zweiten Filtermediums 7 den zweiten Durchlass 15 darstellt. Unter Oberflächen des ersten Filtermediums 6 und des zweiten Filtermediums 7 sind stets solche Flächen zu verstehen, die von der Filterkammer 3 wegweisen. Wird Fluid von dem ersten Durchlass 14 zu dem zweiten Durchlass 15 transportiert, so wird dieses durch die Filtermedien 6, 7 gefiltert. Dadurch ist sichergestellt, dass kein ungefiltertes Fluid den Flüssigkeitsfilter 1 verlassen kann. Das Verschlusselement 5 des Flüssigkeitsfilters 1 kann bevorzugt als Vorfilter ausgebildet sein. So kann insbesondere durch die erste Öffnung 20 Fluid zu dem Verschlusselement 5 gelangen und von dem Verschlusselement 5 durch die zweite Öffnung 21 in die Filterkammer 7. Durch die Vorfilterung des Verschlusselements ist somit eine verbesserte Filterwirkung erreichbar. Außerdem lässt sich das Fluid bereits während des Befüllens durch das Verschlusselement 5 zumindest teilweise filtern. Somit ist sichergestellt, dass die Menge von ungefiltertem Fluid, das während des Befüllens des Flüssigkeitsfilters 1 durch den Flüssigkeitsfilter 1 hindurch läuft, minimiert ist.

## Patentansprüche

1. Flüssigkeitsfilter (1), umfassend einen Tragrahmen (2), der eine Filterkammer (3) und eine Zusatzkammer (4) umfasst,
• wobei in oder an die Filterkammer (3) ein Filtermedium (6, 7) anordenbar ist,
• wobei die Filterkammer (3) von der Zusatzkammer (4) durch eine Trennwand (8) getrennt ist,
• wobei die Filterkammer (3) einen ersten Durchlass (14) und einen zweiten Durchlass (15) aufweist, sodass Fluid (9) durch die Filterkammer (3) strömen kann,
• wobei die Zusatzkammer (4) durch zumindest eine erste Öffnung (20) in dem Tragrahmen (2) mit einer Umgebung des Flüssigkeitsfilters (1) und durch zumindest eine zweite Öffnung (21) in der Trennwand (8) mit der Filterkammer (3) zur Fluidkommunikation verbunden ist,
• wobei die erste Öffnung (20) und die zweite Öffnung (21) durch ein innerhalb der Zusatzkammer (4) angeordnetes Verschlusselement (5) verschließbar sind, und
• wobei ein Volumen des Verschlusselements (5) veränderbar ist, um die erste Öffnung (20) und die zweite Öffnung (21) zu verschließen.

2. Flüssigkeitsfilter (1) nach Anspruch 1, **dadurch gekennzeichnet, dass** das Verschlusselement (5) ein Schwammelement ist, das insbesondere aus einem porösen Werkstoff, besonders bevorzugt aus Zellulosefasern und/oder geschäumten Kunststoff, gefertigt ist, und das ohne Fluidbenetzung ein geringeres Volumen aufweist als mit Fluidbenetzung.

3. Flüssigkeitsfilter (1) nach einem der vorhergehenden Ansprüche, **dadurch gekennzeichnet, dass** das Volumen des Verschlusselements (5) ohne Fluidbenetzung geringer ist als das Volumen der Zusatzkammer (4) und das Volumen des Verschlusselements (5) mit Fluidbenetzung mindestens so groß ist wie das Volumen der Zusatzkammer (4).

4. Flüssigkeitsfilter (1) nach einem der vorhergehenden Ansprüche, **dadurch gekennzeichnet, dass** die Zusatzkammer (4) mit Ausnahme der ersten Öffnung (20) und der zweiten Öffnung (21) ein abgeschlossenes Volumen aufweist, das eine Ausdehnung des Verschlusselements (5) aufgrund Fluidbenetzung beschränkt.

5. Flüssigkeitsfilter (1) nach einem der vorhergehenden Ansprüche, **dadurch gekennzeichnet, dass** das Verschlusselement (5) als Vorfilter ausgebildet ist.

6. Flüssigkeitsfilter (1) nach einem der vorhergehenden Ansprüche, **dadurch gekennzeichnet, dass** die erste Öffnung (20) eine obere erste Öffnung (16) und eine untere erste Öffnung (17) aufweist, während die zweite Öffnung (21) eine obere zweite Öffnung (18) und eine untere zweite Öffnung (19) aufweist, wobei bei einer während der Verwendung des Flüssigkeitsfilters (1) vorgesehenen Lage des Tragrahmens (2) die obere erste Öffnung (16) oberhalb der unteren ersten Öffnung (17) und die obere zweite Öffnung (18) oberhalb der unteren zweiten Öffnung (19) angeordnet ist.

7. Flüssigkeitsfilter (1) nach einem der vorhergehenden Ansprüche, **dadurch gekennzeichnet, dass** die Filterkammer (3) größer als die Zusatzkammer (4) ausgebildet ist, wobei ein Volumen der Filterkammer (3) bevorzugt zumindest das Doppelte, insbesondere zumindest das Dreifache, des Volumens der Zusatzkammer (4) beträgt.

8. Flüssigkeitsfilter (1) nach einem der vorhergehenden Ansprüche, **dadurch gekennzeichnet, dass** die Filterkammer (3) ein durchgängiges Filtermedium oder ein erstes Filtermedium (6) und ein zweites Filtermedium (7) mit dazwischenliegendem Hohlraum (22) aufweist.

9. Flüssigkeitsfilter (1) nach Anspruch 8, **dadurch gekennzeichnet, dass** die zweite Öffnung (21), insbesondere vollständig, in einem Bereich der Trennwand (8) zwischen dem ersten Filtermedium (6) und dem zweiten Filtermedium (7) angeordnet ist.

10. Tankeinsatzmodul (10) zum Einsatz in einen Flüssigkeitstank (11) umfassend einen Flüssigkeitsfilter (1) nach einem der vorhergehenden Ansprüche, wobei das Tankeinsatzmodul (10) einen Auslass (13) des Flüssigkeitstanks (11) darstellt.

## Claims

1. Liquid filter (1), comprising a support frame (2) which comprises a filter chamber (3) and an additional chamber (4),
• it being possible for a filter medium (6, 7) to be arranged in or on the filter chamber (3),
• the filter chamber (3) being separated from the additional chamber (4) by way of a dividing wall (8),
• the filter chamber (3) having a first passage (14) and a second passage (15), with the result that fluid (9) can flow through the filter chamber (3),
• the additional chamber (4) being connected by way of at least one first opening (20) in the support frame (2) to a surrounding area of the liquid filter (1), and being connected by way of at least one second opening (21) in the dividing wall (8) to the filter chamber (3) for fluid communication,
• it being possible for the first opening (20) and the second opening (21) to be closed by way of a closure element (5) which is arranged within the additional chamber (4), and
• a volume of the closure element (5) being variable, in order to close the first opening (20) and the second opening (21).

2. Liquid filter (1) according to Claim 1, **characterized in that** the closure element (5) is a sponge element which is manufactured, in particular, from a porous material, particularly preferably from cellulose fibres and/or foamed plastic, and which has a smaller volume without fluid wetting than with fluid wetting.

3. Liquid filter (1) according to either of the preceding claims, **characterized in that** the volume of the closure element (5) without fluid wetting is smaller than the volume of the additional chamber (4), and the volume of the closure element (5) with fluid wetting is at least as great as the volume of the additional chamber (4).

4. Liquid filter (1) according to one of the preceding claims, **characterized in that**, with the exception of the first opening (20) and the second opening (21), the additional chamber (4) has a closed volume which limits an expansion of the closure element (5) on account of fluid wetting.

5. Liquid filter (1) according to one of the preceding claims, **characterized in that** the closure element (5) is configured as a pre-filter.

6. Liquid filter (1) according to one of the preceding claims, **characterized in that** the first opening (20) has an upper first opening (16) and a lower first opening (17), whereas the second opening (21) has an upper second opening (18) and a lower second opening (19), the upper first opening (16) being arranged above the lower first opening (17) and the upper second opening (18) being arranged above the lower second opening (19) in the case of a position of the support frame (2), which position is provided during the use of the liquid filter (1).

7. Liquid filter (1) according to one of the preceding claims, **characterized in that** the filter chamber (3) is of greater configuration than the additional chamber (4), a volume of the filter chamber (3) preferably being at least two times, in particular at least three times, the volume of the additional chamber (4).

8. Liquid filter (1) according to one of the preceding claims, **characterized in that** the filter chamber (3) has a continuous filter medium or a first filter medium (6) and a second filter medium (7) with a cavity (22) which lies in between.

9. Liquid filter (1) according to Claim 8, **characterized in that** the second opening (21) is arranged, in particular completely, in a region of the dividing wall (8) between the first filter medium (6) and the second filter medium (7).

10. Tank insert module (10) for insertion into a liquid tank (11) comprising a liquid filter (1) according to one of the preceding claims, the tank insert module (10) representing an outlet (13) of the liquid tank (11).

## Revendications

1. Filtre pour liquide (1), comprenant un cadre porteur (2) qui comprend une chambre de filtration (3) et une chambre auxiliaire (4),
• un milieu filtrant (6, 7) pouvant être disposé dans ou sur la chambre de filtration (3),
• la chambre de filtration (3) étant séparée de la chambre auxiliaire (4) par une cloison de séparation (8),
• la chambre de filtration (3) présentant un premier passage (14) et un deuxième passage (15) de sorte qu'un fluide (9) peut s'écouler à travers la chambre de filtration (3),
• la chambre auxiliaire (4) étant reliée par au moins une première ouverture (20) dans le cadre porteur (2) à un environnement du filtre pour liquide (1) et étant reliée par au moins une deuxième ouverture (21) dans la cloison de séparation (8) à la chambre de filtration (3) pour une communication fluidique,
• la première ouverture (20) et la deuxième ouverture (21) pouvant être fermées par un élément de fermeture (5) disposé à l'intérieur de la chambre auxiliaire (4), et
• un volume de l'élément de fermeture (5) étant variable afin de fermer la première ouverture (20) et la deuxième ouverture (21).

2. Filtre pour liquide (1) selon la revendication 1, **caractérisé en ce que** l'élément de fermeture (5) est un élément spongieux qui est fabriqué en particulier en un matériau poreux, de manière particulièrement préférée en fibres de cellulose et/ou en matière plastique expansée, et qui présente sans mouillage par un fluide un volume inférieur qu'avec mouillage par un fluide.

3. Filtre pour liquide (1) selon l'une quelconque des revendications précédentes, **caractérisé en ce que** le volume de l'élément de fermeture (5) sans mouillage par un fluide est inférieur au volume de la chambre auxiliaire (4) et le volume de l'élément de fermeture (5) avec mouillage par un fluide est au moins aussi grand que le volume de la chambre auxiliaire (4).

4. Filtre pour liquide (1) selon l'une quelconque des revendications précédentes, **caractérisé en ce que** la chambre auxiliaire (4) présente à l'exception de la première ouverture (20) et de la deuxième ouverture (21) un volume fermé qui limite l'expansion de l'élément de fermeture (5) en raison du mouillage par un fluide.

5. Filtre pour liquide (1) selon l'une quelconque des revendications précédentes, **caractérisé en ce que** l'élément de fermeture (5) est réalisé sous forme de préfiltre.

6. Filtre pour liquide (1) selon l'une quelconque des revendications précédentes, **caractérisé en ce que** la première ouverture (20) présente une première ouverture supérieure (16) et une première ouverture inférieure (17) alors que la deuxième ouverture (21) présente une deuxième ouverture supérieure (18) et une deuxième ouverture inférieure (19), dans lequel, dans une position du cadre porteur (2) prévue pendant l'utilisation du filtre pour liquide (1), la première ouverture supérieure (16) est disposée au-dessus de la première ouverture inférieure (17) et la deuxième ouverture supérieure (18) est disposée au-dessus de la deuxième ouverture inférieure (19).

7. Filtre pour liquide (1) selon l'une quelconque des revendications précédentes, **caractérisé en ce que** la chambre de filtration (3) est plus grande que la chambre auxiliaire (4), un volume de la chambre de filtration (3) étant de préférence au moins deux fois, en particulier au moins trois fois, le volume de la chambre auxiliaire (4) .

8. Filtre pour liquide (1) selon l'une quelconque des revendications précédentes, **caractérisé en ce que** la chambre de filtration (3) présente un milieu filtrant continu ou un premier milieu filtrant (6) et un deuxième milieu filtrant (7) avec une cavité intermédiaire (22).

9. Filtre pour liquide (1) selon la revendication 8, **caractérisé en ce que** la deuxième ouverture (21), est disposée, en particulier complètement, dans une zone de la cloison de séparation (8) entre le premier milieu filtrant (6) et le deuxième milieu filtrant (7).

10. Module d'insertion de réservoir (10) destiné à l'insertion dans un réservoir de liquide (11), comprenant un filtre pour liquide (1) selon l'une quelconque des revendications précédentes, le module d'insertion de réservoir (10) étant une évacuation (13) du réservoir de liquide (11).
